# EUROPÄISCHE PATENTANMELDUNG

(11) **EP 4 707 203 A1**
(43) Veröffentlichungstag der Anmeldung: **11.03.2026**
(21) Anmeldenummer: 25198146.0
(22) Anmeldetag: 26.08.2025
(51) Int. Cl.: B65G 47/14, H01R 43/055

(54) **ZUFÜHREINRICHTUNG**

(30) Priorität: 28.08.2024 DE 102024124508
(71) Anmelder: Zoller & Fröhlich GmbH, 88239 Wangen im Allgäu (DE)
(72) Erfinder: FRÖHLICH, Christoph, 88239 Wangen im Allgäu (DE); LEUPOLZ, Hans, 88260 Argenbühl (DE)
(74) Vertreter: Winter, Brandl - Partnerschaft mbB

(57) **Zusammenfassung**

Offenbart ist eine Zuführeinrichtung zur lagedefinierten Zuführung von Kontaktelementen zu einer Verarbeitungseinheit, wobei die Zuführeinrichtung einen Schwingfördertopf (2) und einen von diesem umgriffenen Innentopf (4) zur Aufnahme unterschiedlicher Kontaktelemente aufweist.

## Beschreibung

Die Erfindung betrifft eine Zuführeinrichtung zur lagedefinierten Zuführung von Kontaktelementen gemäß dem Oberbegriff des Patentanspruches 1.

Derartige Zuführeinrichtungen werden beispielsweise zum Zuführen von Aderendhülsen zu einem Crimpautomaten verwendet. Aderendhülsen können beispielsweise als gegurtete Rollen bereitgestellt werden, die dann je nach benötigtem Aderendhülsentyp über eine Fördereinheit zur weiteren Verarbeitung dem Crimpautomaten zugeführt werden. Eine derartige Lösung zur Verarbeitung gegurteter Aderendhülsen ist beispielsweise in der DE 10 2015 102 060 A1 der Anmelderin offenbart und unter dem Namen "Z+F Unic-GV^{®}" vertrieben.

In vielen Fällen werden die Aderendhülsen oder sonstige Kontaktelemente jedoch nicht gegurtet sondern vereinzelt verarbeitet, wobei die vereinzelten Kontaktelemente über einen Schwingfördertopf der Verarbeitungseinheit, insbesondere dem Crimpautomaten, zugeführt werden. Der Aufbau derartiger, mit einem Schwingfördertopf ausgeführter Zuführeinrichtungen ist beispielsweise in den ebenfalls auf die Anmelderin zurückgehenden Druckschriften DE 20 2014 105 634 U1 und DE 10 2017 102 618 A1 beschrieben. Bei diesen bekannten Fördereinrichtungen sind die vereinzelten Kontaktelemente, beispielsweise Aderendhülsen, in dem Schwingfördertopf aufgenommen, wobei dieser über eine Vibrationseinheit derart in Schwingung versetzt wird, dass die losen Aderendhülsen entlang einer spiralförmigen Förderbahn entlang der Innenumfangswandung des Schwingfördertopfes in Richtung zu einer Ausrichteinheit der Zuführeinrichtung gefördert werden. In dieser Ausrichteinheit werden die Aderendhülsen in eine vorbestimmte Verarbeitungslage gebracht und ggf. über eine nachgeordnete Vereinzelungseinrichtung zu einer Schnittstelle gefördert, von der aus die vereinzelten, lageorientiert ausgerichteten Aderendhülsen dann der Verarbeitungseinheit, im vorliegenden Fall dem Crimpautomaten, zugeführt werden. Eine derartige Verarbeitungseinheit wird von der Anmelderin beispielsweise unter dem Namen "Z+F Unic-LS^{®}" angeboten, über die vereinzelte Aderendhülsen mit einem abisolierten Kabelende vercrimpt werden.

In der Serienproduktion ist es erforderlich, unterschiedliche Kabelquerschnitte und elektrische Bauelemente/Kontaktelemente miteinander zu vercrimpen. Bei gegurteten Kontaktelementen/Aderendhülsen ist dieses mit einer Verarbeitungseinheit, wie sie in der oben genannten DE 10 2015 102 060 A1 beschrieben ist, relativ einfach möglich, da hierzu lediglich die das gewünschte Kontaktelement aufnehmende Rolle angesteuert werden muss. Der oben genannte Stripper-Crimper "Z+F Unic-LS^{®}" ist zwar so ausgelegt, dass unterschiedliche Kabelquerschnitte ohne aufwendige Umrüstung abisolierbar und vercrimpbar sind, wobei allerdings jeweils ein die vorgesehenen Kontaktelemente aufnehmender Schwingfördertopf montiert werden muss, über den die vereinzelten Kontaktelemente zur Schnittstelle gefördert werden. Zur Verringerung dieser Umrüstzeiten wird in dem europäischen Patent EP 3 794 690 B1 der Anmelderin vorgeschlagen, eine Bearbeitungseinheit, beispielsweise einen vorbeschriebenen Stripper-Crimper mit einer Vielzahl von Schwingfördertöpfen auszubilden, die entweder in einer Ebene nebeneinander liegend oder in Vertikalrichtung übereinander liegend positioniert sind, wobei jedem Schwingfördertopf wiederum eine Ausricht-und/oder Vereinzelungseinrichtung zugeordnet ist, über das das jeweilige Kontaktelement zur Schnittstelle des Crimpautomaten gefördert werden kann.

Ähnliche Bearbeitungseinheiten mit mehreren Schwingfördertöpfen sind auch aus den Druckschriften CN 104 466 603 A, CN 104 300 340 A, EP 0 036 240 A1, CN 105 703 195 A oder US 5,511,307 A bekannt, wobei ebenfalls zumindest zwei Schwingfördertöpfe übereinander oder in einer Horizontalebene nebeneinander liegend angeordnet sind.

Mit einem derartigen System lassen sich zwar die Rüstzeiten bei der Umstellung auf unterschiedliche Kontaktelemente gegenüber den eingangs genannten Lösungen etwas verringern - problematisch bleibt jedoch weiterhin, dass ein erheblicher Platzbedarf zur Aufnahme der unterschiedlichen Schwingfördertöpfe erforderlich ist, so dass eine kompakte Ausführung eines Stripper-Crimpers schwierig ist.

Demgegenüber liegt der Erfindung die Aufgabe zugrunde, eine Zuführeinrichtung zur lagedefinierten Zuführung von Kontaktelementen zu einer Verarbeitungseinheit zu schaffen, die bei kompaktem Aufbau eine variable Verarbeitung unterschiedlicher vereinzelter Kontaktelemente ermöglicht.

Diese Aufgabe wird durch eine Zuführeinrichtung mit den Merkmalen des Patentanspruches 1 gelöst.

Vorteilhafte Weiterbildungen der Erfindung sind Gegenstand der Unteransprüche.

Die erfindungsgemäße Zuführeinrichtung ist vorzugweise zur lagedefinierten Zuführung von Kontaktelementen, wie beispielsweise Aderendhülsen, zu einer Verarbeitungseinheit, vorzugsweise einem Crimpautomaten, ausgelegt und hat einen Schwingfördertopf, über den die Kontaktelemente von einem Aufnahmeraum entlang einer etwa spiralförmigen, entlang einer Innenumfangswandung des Schwingfördertopfes ausgebildeten Förderbahn in Richtung zu einer mit dem Schwingfördertopf in Wirkverbindung stehenden Ausrichtungseinheit förderbar sind, der eine Kulisse zugeordnet ist, entlang der die Kontaktelemente lageorientiert in Richtung einer Schnittstelle zur Verarbeitungseinheit transportierbar sind. Erfindungsgemäß ist ein Schwingförder-Innentopf vorgesehen, der, vorzugsweise koaxial, zumindest abschnittsweise vom Schwingfördertopf umgriffen ist und der mit einer etwa spiralförmigen Innenförderbahn, einer Innenkulisse und einer Innen-Ausrichteinheit sowie einer Innenschnittstelle zur Verarbeitungseinheit ausgeführt ist, die im Abstand, vorzugsweise zumindest teilweise in einem Radial- oder Umfangsabstand (d.h. in Umfangsrichtung gesehen) zu den entsprechenden Komponenten des Schwingfördertopfes verlaufen bzw. positioniert sind.

Durch das erfindungsgemäße Konzept wird somit ein Topf-in-Topf-System geschaffen, bei dem der Innentopf zumindest abschnittsweise vom Schwingfördertopf umgriffen ist, so dass der erforderliche Bauraum gegenüber den herkömmlichen Lösungen, bei denen die Schwingfördertöpfe in Vertikalrichtung versetzt zueinander oder in einer Horizontalebene angeordnet sind, wesentlich verringert wird. Im Prinzip wird zur Verarbeitung von zwei unterschiedlichen Kontaktelementen der gleiche Bauraum benötigt, wie er bei herkömmlichen Lösungen für die Bereitstellung eines einzigen Kontaktelementtyps erforderlich ist.

Selbstverständlich können einer Bearbeitungseinheit auch mehrere derartiger Topf-in-Topf-Anordnungen zugeordnet werden, so dass beispielsweise vier oder sechs Kontaktelementtypen in jeweils einem Schwingfördertopf/Innentopf bereitgestellt werden und mittels einer Verarbeitungseinheit weiterverarbeitet werden können.

Bei einem Ausführungsbeispiel der Erfindung kragt der Innentopf mit der daran aus\gebildeten Ausrichteinheit und der Innenkulisse mit Bezug zur Innenförderbahn in Axialrichtung aus dem Schwingfördertopf aus, wobei an diesem auskragenden Bereich des Innentopfes die Innenausrichteinheit und die Innenschnittstelle ausgebildet sind. Dabei ist es besonders vorteilhaft, wenn die Schnittstelle und die Innenschnittstelle in Radialrichtung gegenüber dem Topfumfang, d.h. dem Umfang des Schwingfördertopfes, und des Innentopfes nach außen versetzt sind.

Besonders bevorzugt ist es, wenn die Schnittstellen bzw. die zu diesen führenden Komponenten der Zuführeinrichtung etwa in Umfangsrichtung und etwa in Richtung der Achse des Schwingfördertopfs versetzt angeordnet sind.

Die Abstützung des Innentopfes ist besonders einfach, wenn am Boden des Schwingfördertopfes etwa mittig eine Stützbuchse angeordnet ist, auf der der Innentopf abgestützt ist.

Diese Stützbuchse kann dabei entweder einstückig an dem Schwingfördertopf oder dem Innentopf ausgebildet sein oder aber als Adapterring ausgeführt werden, der einerseits auf dem Boden des Schwingfördertopfes abgestützt ist und andererseits eine Auflage für den Innentopf ausbildet.

Die Relativpositionierung des Schwingfördertopfes und des Innentopfes sowie das Auswechseln dieser Komponenten ist besonders einfach, wenn die Zuführeinrichtung mit einer zentralen Fixierschraubenanordnung versehen ist, über die der Schwingfördertopf und der Innentopf mit einem Vibrationsantrieb verbunden sind.

Der Transport der Kontaktelemente in Richtung zur Schnittstelle ist besonders präzise, wenn der Ausrichteinheit eine Vereinzelungseinrichtung zugeordnet ist, über die die Kontaktelemente vereinzelt werden und dann der Schnittstelle bzw. der Innenschnittstelle zuführbar sind.

Eine derartige Vereinzelungseinrichtung kann beispielsweise eine Aufnahme für ein Kontaktelement aufweisen, die mittels einer Transporteinrichtung, insbesondere mittels eines Schiebers oder Zylinders, in Richtung zur Schnittstelle/Innenschnittstelle verschiebbar ist.

Der vorrichtungstechnische Aufwand lässt sich weiter verringern, wenn die Innenschnittstelle des Innentopfes und die Schnittstelle des Schwingfördertopfes jeweils mit einem Führungsrohr ausgeführt sind, über das die Aderendhülsen in Richtung zur Verarbeitungseinheit geführt sind und die vorzugsweise in Parallelabstand zueinander angeordnet sind und in etwa achsparallel zur Achse des Innentopfes und des Schwingfördertopfes verlaufen.

Die Führung der Kontaktelemente ist besonders präzise, wenn Endabschnitte der Kulissen etwa tangential zum zugeordneten Innentopf/Schwingfördertopf verlaufen und in einem spitzen Winkel relativ zueinander angestellt sind, so dass die Kompaktheit der Anordnung weiter verbessert ist.

Der außen liegende Schwingfördertopf kann mit einer vergleichsweise glatten Umfangswandung oder aber auch mit einer entsprechend der Förderbahn abgestuften Umfangswandung ausgeführt sein, so dass letztendlich die Förderbahn durch die Umfangswandungsgestaltung ausgebildet ist.

Bevorzugte Ausführungsbeispiele der Erfindung werden im Folgenden anhand schematischer Zeichnungen näher erläutert. Es zeigen:
Figur 1 eine dreidimensionale Darstellung eines ersten Ausführungsbeispiels einer erfindungsgemäßen Zuführeinrichtung;
Figur 2 eine Draufsicht auf die Zuführeinrichtung gemäß Figur 1;
Figur 3 einen Schnitt entlang der Ebene A-A in Figur 2;
Figur 4 eine Seitenansicht der Zuführeinrichtung gemäß Figur 1;
Figur 5 eine dreidimensionale Darstellung eines weiteren Ausführungsbeispiels einer Zuführeinrichtung;
Figur 6 eine Draufsicht der Zuführeinrichtung gemäß Figur 5;
Figur 7 einen Schnitt entlang der Schnittebene A-A in Figur 6;
Figur 8 eine Seitenansicht der Zuführeinrichtung gemäß Figur 5;
Figur 9 eine dreidimensionale Darstellung eines dritten Ausführungsbeispiels einer Zuführeinrichtung;
Figur 10 eine Draufsicht auf die Zuführeinrichtung gemäß Figur 9;
Figur 11 einen Schnitt entlang der Ebene A-A in Figur 10 und
Figur 12 eine Seitenansicht der Zuführeinrichtung gemäß Figur 9.

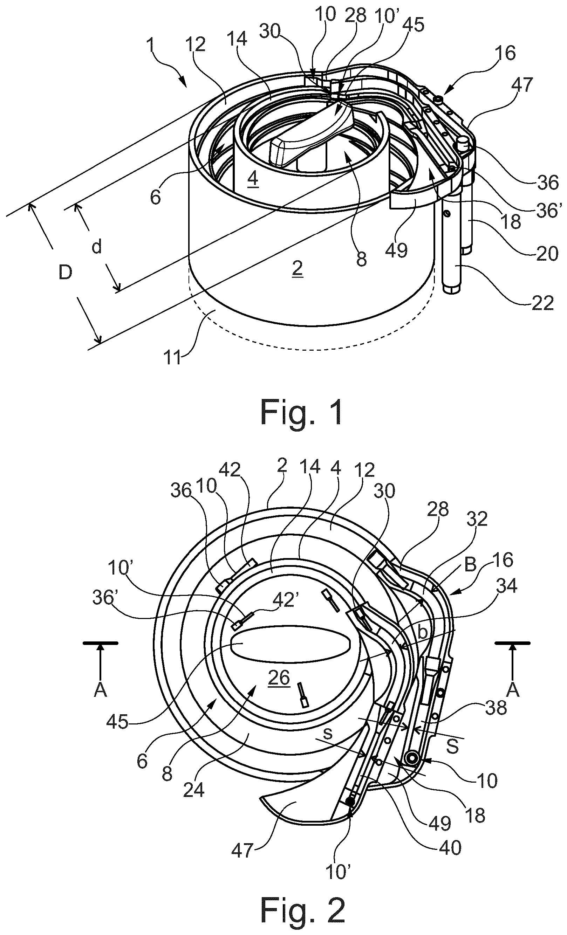

Figur 1 zeigt ein erstes Ausführungsbeispiel einer nach dem erfindungsgemäßen Topf-in-Topf-Konzept ausgeführten Zuführeinrichtung 1, die mit einem Schwingfördertopf 2 ausgeführt ist, in dem zumindest abschnittsweise ein Innentopf 4 aufgenommen ist. Beim dargestellten Ausführungsbeispiel sind der Schwingfördertopf 2 und der innen liegende Innentopf 4 koaxial zueinander angeordnet, wobei entsprechend der Durchmesser D des Schwingfördertopfes 2 deutlich größer als der Durchmesser d des Innentopfes 4 ausgebildet ist, so dass zwischen diesen ein Ringraum verbleibt, der einen Aufnahmeraum 6 des Schwingfördertopfes 2 für Kontaktelemente, beispielsweise Adendhülsen 10 begrenzt. Die Umfangswandung des Innentopfes 4 mit dem Durchmesser d umgreift entsprechend einen Innenaufnahmeraum 8 für weitere Kontaktelemente, beispielsweise Aderendhülsen 10'.

Beiden Töpfen ist bei diesem Ausführungsbeispiel ein in Figur 1 gestrichelt angedeuteter Vibrationsantrieb 11 zugeordnet, über den der Innentopf 4 und der Schwingfördertopf 2 in Vibration versetzt werden können, so dass die im Aufnahmeraum/Innenaufnahmeraum 6, 8 aufgenommenen Aderendhülsen 10,10' entlang einer spiralförmigen Förderbahn 12 des Schwingfördertopfes 2 bzw. einer Innenförderbahn 14 des Innentopfes 4 in Richtung zu einer Ausrichtungseinheit 16 bzw. einer Innenausrichtungseinheit 18 gefördert werden, über die dann die vereinzelten und ausgerichteten Aderendhülsen 10 der Verarbeitungseinheit, beispielsweise einem Crimpautomaten des Typs "Z+F Unic-LS^{®}" zuführbar ist. Bei dem in Figur 1 dargestellten Ausführungsbeispiel ist diese Schnittstelle mit jeweils einem Führungsrohr 20 bzw. Innenführungsrohr 22 ausgeführt, über das die jeweilige Aderendhülse 10, 10' in Richtung zum Crimpautomaten gefördert wird.

Figur 2 zeigt eine Draufsicht auf die Zuführeinrichtung 1 gemäß Figur 1. Man erkennt in dieser Darstellung die im ringförmigen Aufnahmeraum 6 des Schwingfördertopfes 2 aufgenommenen Aderendhülsen 10 und die im etwa zylinderförmigen Innenaufnahmeraum 8 des Innentopfs 4 aufgenommenen Aderendhülsen 10', wobei diese einen beispielsweise einen unterschiedlichen Querschnitt aufweisen. Bei nicht angesteuertem Vibrationsantrieb 11 liegen die Aderenthülsen 10, 10' jeweils auf dem Boden 24 des Aufnahmeraums 6 bzw. dem Innenboden 26 des Innenaufnahmeraums 8 auf. Bei Ansteuerung des Vibrationsantriebs 11 werden die Aderendhülsen 10, 10' jeweils entlang der zugeordneten spiralförmigen Förderbahn 12 des Schwingfördertopfes 2 bzw. entlang der spiralförmigen Innenförderbahn 14 des Innentopfes 4 vom jeweiligen Boden 24/ Innenboden 26 in Richtung zur zugeordneten Ausrichteinheit 16 bzw. Innenausrichtungseinheit 18 gefördert.

Dabei ist an einem jeweiligen Förderbahnausgang 28 bzw. Innenförderbahnausgang 30 eine Führungs-Kulisse 32 bzw. eine Innenkulisse 34 angeordnet, entlang denen die Aderendhülsen 10, 10' dann zur eigentlichen Ausrichtungseinheit 32 bzw. Innenausrichtungseinheit 34 gefördert werden, wobei diese Förderung aufgrund der über den Vibrationsantrieb 11 eingetragenen kinetischen Energie erfolgt. Eine Breite B, b der Kulissen 32, 34 entspricht dabei dem Durchmesser des jeweiligen Kunststoffkragens 36, 36' der Aderendhülsen 10, 10', so dass diese liegend entlang der Kulisse 32, 34 gefördert werden. Die eigentliche Lageorientierung erfolgt dann im Endbereich der jeweiligen Führungskulisse 32, Innenkulisse 34. Beim dargestellten Ausführungsbeispiel erfolgt diese Lageorientierung dadurch, dass im Boden der jeweiligen Kulisse 32, 34 ein Ausrichtschlitz 38 bzw. Innenausrichtschlitz 40 vorgesehen ist, dessen Schlitzbreite S, s dem Aderendhülsendurchmesser entspricht.

Wird nun die jeweilige Aderendhülse 10, 10' bei aktiviertem Vibrationsantrieb 11 in diesen Schlitzbereich gefördert, stellt sich die jeweilige Aderendhülse 10, 10' in Vertikalrichtung (senkrecht zur Zeichenebene in Figur 2) auf, wobei die jeweilige Hülse 42, 42' aufgrund der Schwerkraftwirkung durch den Ausrichtschlitz 38 bzw. dem Innenausrichtschlitz 40 nach unten kippt, während der Kunststoffkragen 36, 36' mit seinem größeren Querschnitt in der Führungskulisse 32 bzw. der Innenkulisse 34 verbleibt, so dass die Aderendhülsen 10, 10' in Vertikalrichtung (senkrecht zur Zeichenebene in Figur 2) ausgerichtet sind, wobei die jeweiligen Kunststoffkragen 36, 36' - wie in Figur 2 angedeutet - zum Betrachter hinweisen. Diese Position ist auch recht anschaulich in Figur 1 dargestellt. Dabei spielt es im keine Rolle, ob die Aderendhülsen 10, 10' mit der jeweiligen Hülse 42, 42' in Förderrichtung nach vorne oder entgegen der Förderrichtung nach hinten orientiert sind, da in jedem Fall ein schwerkraftbedingtes Kippen durch den Ausrichtschlitz 38 bzw. den Innenausrichtschlitz 40 hindurch gewährleistet ist. Es kann jedoch auch eine geeignete Vorrichtung vorgesehen werden, um sicherzustellen, dass die Aderendhülsen 10, 10' in der richtigen Lageorientierung (Hülse 42, 42' in Förderrichtung nach vorne) zugeführt wird. Zusätzlich kann auch ein Abstreifer oder dergleichen vorgesehen sein, um beispielsweise nicht in der dargestellten Horizontalposition ausgerichtete Aderendhülsen 10, 10' abzustreifen und zurück in den zugeordneten Aufnahmeraum 6 bzw. Innenaufnahmeraum 8 zu verbringen.

In der in Figur 1 dargestellten Position am Ende des Ausrichtschlitzes 38 bzw. des Innenausrichtschlitzes 40 sind die Aderendhülsen 10, 10' dann mit Bezug zum zugeordneten Führungsrohr 20 bzw. Innenführungsrohr 22 ausgerichtet und können dann in dieses eintreten, so dass die ausgerichteten und vereinzelten Aderendhülsen 10, 10' lageorientiert der Schnittstelle des Crimpautomaten oder der sonstigen Verarbeitungseinheit zugeführt werden können, wobei die jeweils benötigte Aderendhülse 10, 10' dann über geeignete Zuführeinrichtungen einem Crimpkopf des Crimpautomaten zugeführt wird..

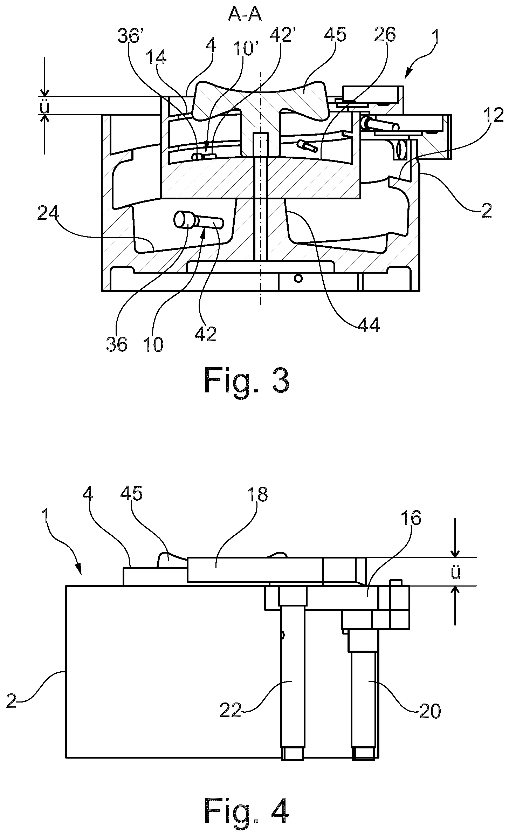

Die Geometrie der Förderbahn 12 und der Innenförderbahn 14 ist anschaulich in der Figur 3 gezeigt, die einen Schnitt entlang der Schnittebene A-A in Figur 2 darstellt. Demgemäß sind, wie erläutert, die Förderbahn 12 und die Innenförderbahn 14 an der Innenumfangswandung des Schwingfördertopfes 2 bzw. des Innentopfs 4 ausgebildet. In dieser Darstellung sieht man auch die koaxiale Anordnung des Innentopfes 4 mit Bezug zum Schwingfördertopf 2. Der Boden 24 des Schwingfördertopfes 2 und der Innenboden 26 des Innentopfes 4 sind zur Umfangswandung hin abfallend geneigt ausgebildet, so dass die Aderendhülsen 10, 10' alleine durch die Schwerkraft in Richtung zu der den Boden 24 und den Innenboden 26 umgreifenden Förderbahn 12 bzw. Innenförderbahn 14 beaufschlagt sind. Der Innenboden 26 des Innentopfes 4 ist dabei auf einer Stützbuchse 44 abgestützt, die aus dem Boden 24 des Schwingfördertopfes 2 auskragt. Die Relativposition des Schwingfördertopfes 2 mit Bezug zum Innentopf 4 und auch mit Bezug zum in Figur 3 nicht dargestellten Vibrationsantrieb 11 (siehe Figur 1) ist durch eine Fixierschraubanordnung 45 gewährleistet, die zum Auswechseln des Schwingfördertopfes 2 bzw. des Innentopfes 4 einfach von Hand zu lösen ist. Erfindungsgemäß ist es somit möglich, unterschiedliche Varianten von Schwingfördertöpfen/Innentöpfen zu kombinieren, um den jeweiligen Aderendhülsenquerschnitt zu verarbeiten.

Wie insbesondere der Darstellung in Figur 3 entnehmbar ist, steht der Innentopf 4 in Axialrichtung etwa um das Maß Ü über den oberen Umfangsrand des Schwingfördertopfes 2 hinaus, so dass entsprechend die Förderebenen der Führungskulisse 32 und der Innenkulisse 34 bzw. der Ausrichtungseinheit 16 und der Innenausrichtungseinheit 18 um dieses Maß Ü zueinander versetzt sind, so dass dieser Bereich in der Darstellung gemäß Figur 2 mit einer gewissen Überlappung ausgeführt ist, durch die die Außenabmessungen der erfindungsgemäßen Zuführeinrichtung 1 weiter minimiert sind. Dieses Maß Ü ist auch in der Seitenansicht gemäß Figur 4 eingezeichnet, aus der der Höhenversatz der Ausrichtungseinheit 16 mit Bezug zur Innenausrichtungseinheit 18 deutlich hervorgeht.

Wie insbesondere auch den Figuren 1 und 2 entnehmbar ist, sind dabei die Kulissen 32, 34 der Ausrichtungseinheit 16 und der Innenausrichtungseinheit 18 sowie die daran befestigten Führungsrohre 20, 22 ebenfalls in Umfangsrichtung etwas versetzt zueinander angeordnet, so dass die funktionsmäßige Anbindung an den Crimpautomaten oder die sonstige Verarbeitungseinheit vereinfacht ist.

Gemäß den Figuren 1 und 2 sind die aus dem Außenumfang des Schwingfördertopfes 2 bzw. des Innentopfes 4 auskragenden Bereiche der Ausrichtungseinheit 16 bzw. der Innenausrichtungseinheit 18 noch mit einem sich verbreiternden segmentartigen Endabschnitt 47, 49 ausgeführt, der die jeweilige Einheit 16, 18 nach außen hin abdeckt und die Weiteren die Anbindung an den Crimpautomaten oder die sonstige Verarbeitungseinheit erleichtern.

Bei allen Ausführungsbeispielen wird es bevorzugt, wenn die Ausrichtungseinheit 16 und die Innenausrichtungseinheit 18, insbesondere deren Schnittstellen zum Crimpautomaten, sowohl in Vertikalrichtung in Richtung der Achse der Fördertöpfe als auch in Umfangsrichtung versetzt zueinander angeordnet sind.

Zur Gewährleistung der Lageorientierung des Innentopfes 4 mit Bezug zum Schwingfördertopf 2 und zum Vibrationsantrieb 11 können geeignete Anschläge/Führungselemente vorgesehen werden, durch die die vorbestimmte Winkelposition dieser Komponenten relativ zueinander bestimmt ist, so dass eine präzise Anbindung an den Crimpautomaten oder die sonstige Verarbeitungseinheit gewährleistet ist.

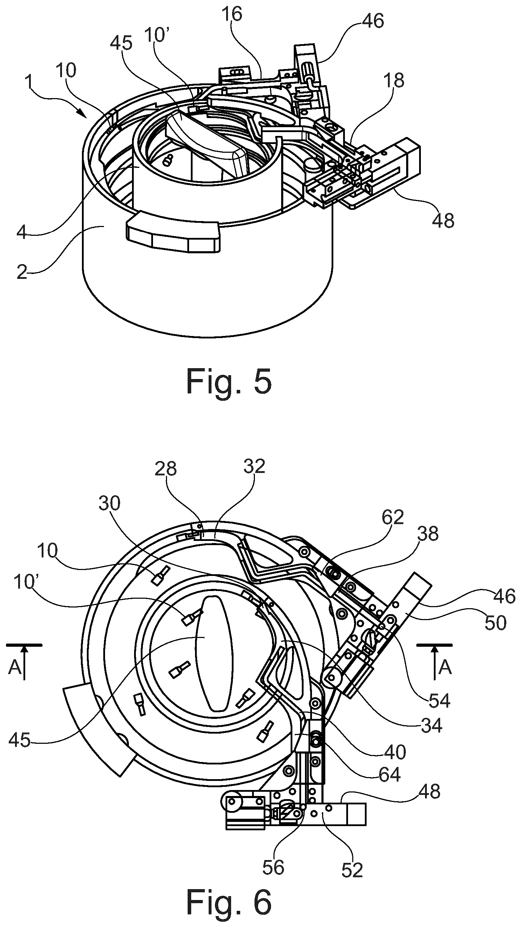

Figur 5 zeigt ein Ausführungsbeispiel einer erfindungsgemäßen Zuführeinrichtung, die ebenfalls nach dem Topf-in-Topf-Konzept ausgeführt ist, wobei im Bereich der Schnittstelle zu dem Crimpautomaten jeweils eine Ausrichtungseinheit 16 bzw. Innenausrichtungseinheit 18 vorgesehen ist, denen jeweils eine Vereinzelungseinrichtung 46 bzw. Innenvereinzelungseinrichtung 48 zugeordnet ist, über die die vereinzelten und ausgerichteten Aderendhülsen 10, 10' dann an die Schnittstelle des Crimpautomaten überführt werden können.

Die Ausrichtungseinheit 16 bzw. die Innenausrichtungseinheit 18 sind, ähnlich wie beim vorbeschriebenen Ausführungsbeispiel, wiederum so ausgeführt, dass die Aderendhülsen 10, 10' aus ihrer am Ende der Förderbahn 12 bzw. am Ende der Innenförderbahn 14 vorliegenden Horizontalposition in eine Vertikalposition verbracht werden, wobei dann die Hülsen 42, 42' jeweils in einen Ausrichtschlitz 38 bzw. in einen Innenausrichtschlitz 40 eintauchen, so dass die Aderendhülsen 10, 10' wie beim oben beschriebenen Ausführungsbeispiel in die Vertikalposition gebracht werden. Wie aus der Draufsicht gemäß Figur 6 hervorgeht, sind bei diesem Ausführungsbeispiel die Führungskulisse 32 und die Innenkulisse 34 mit dem darin ausgebildeten Ausrichtschlitz 38 bzw. Innenausrichtschlitz 40 etwa V-förmig angewinkelt, um die Vereinzelung der Aderendhülsen 10, 10' bei angesteuertem Vibrationsantrieb 11 zu unterstützen und aufgrund der winkeligen Gestaltung der entsprechenden Führung zu gewährleisten, dass die Aderendhülsen 10, 10' eng aneinander liegend in Richtung zur Vereinzelungseinrichtung 46, 48 geführt werden. Wie insbesondere aus der Draufsicht gemäß Figur 6 entnehmbar ist, sind diese jeweils mit einem Schieber 50 bzw. Innenschieber 52 ausgeführt, der in seiner dargestellten Grundposition jeweils mit einer Ausnehmung 54, 56 den Außenumfang der vordersten Aderendhülse 10, 10' abschnittsweise umgreift, so dass bei einer Betätigung des Schiebers 50, 52 die betreffende Aderendhülse 10, 10' in Richtung zur Schnittstelle des Crimpautomaten/der Verarbeitungseinheit gefördert wird, wobei die Übergabe beispielsweise in Vertikalrichtung zur Zeichenebene in Figur 2 erfolgt. Der Grundaufbau der Vereinzelungseinrichtung 46, 48 und der Ausrichtungseinheit 16 bzw. der Innenausrichtungseinheit 18 ist aus dem Stand der Technik gemäß der eingangs genannten Druckschrift DE 10 2017 102 618 A1 bekannt, so dass im Hinblick auf weitere Details auf die diesbezüglichen Ausführungen verwiesen werden kann.

Bei der in den Figuren 5 bis 8 dargestellten Variante sind im Übergabebereich an den Crimpautomaten jeweils ein Abweiser 62 bzw. ein Innenabweiser 64 vorgesehen, durch die sichergestellt ist, dass die Aderendhülsen 10, 10' korrekt positioniert der Vereinzelungseinrichtung 46, 48 zugeführt werden. Derartige Abweiser 62, 64 können bei allen Ausführungsbeispielen vorgesehen werden.

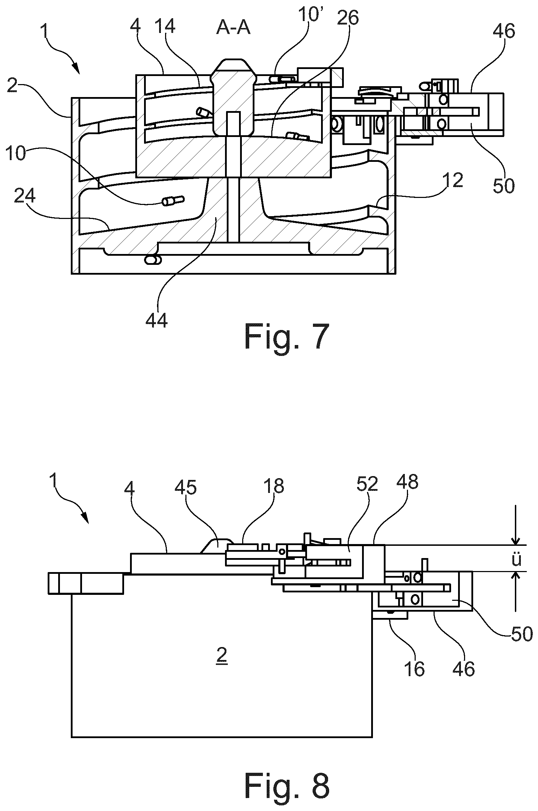

Gemäß der Darstellung in Figur 8 sind auch bei diesem Ausführungsbeispiel die Ausrichtungseinheit 16 mit Bezug zur Innenausrichtungseinheit 18 und entsprechend die Vereinzelungseinrichtung 46 mit Bezug zur Vereinzelungseinrichtung 48 um das Maß Ü versetzt zueinander angeordnet.

Die Abstützung des Innentopfes 4 erfolgt wie beim vorbeschriebenen Ausführungsbeispiel über eine Stützbuchse 44, die einstückig am Boden 24 ausgebildet ist, wobei die Lagefixierung wiederum über eine Fixierschraubanordnung 45 erfolgt. Im Übrigen entspricht das Ausführungsbeispiel gemäß den Figuren 5 bis 8 im Wesentlichen demjenigen, das in den Figuren 1 bis 4 dargestellt ist, so dass weitere Erläuterungen mit Hinweis auf die Ausführungen zu diesen Figuren entbehrlich sind.

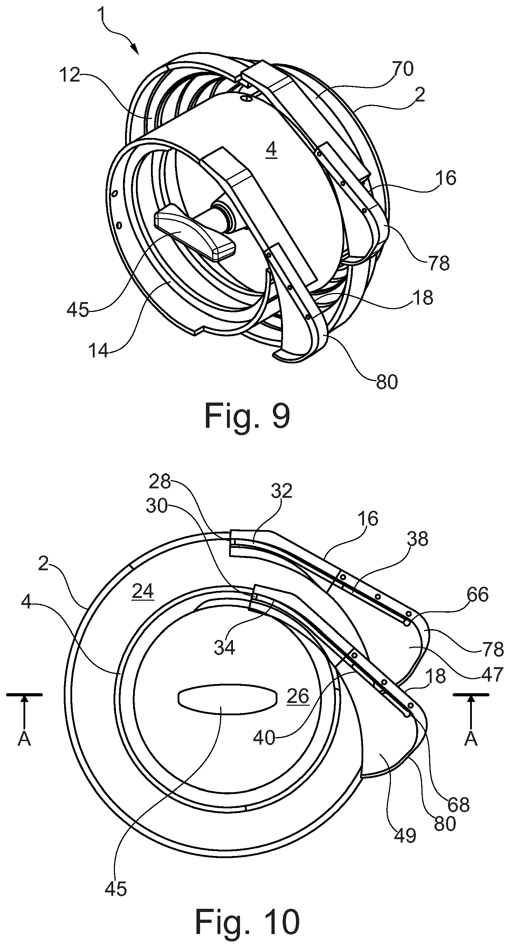

Anhand der Figuren 9 bis 12 wird ein Ausführungsbeispiel erläutert, das gegenüber den vorbeschriebenen Ausführungsbeispielen einen etwas einfacheren Aufbau aufweist. Insbesondere den Darstellungen in den Figuren 9 und 10 ist entnehmbar, dass bei diesem Ausführungsbeispiel die Ausrichtungseinheit 16 bzw. die Innenausrichtungseinheit 18 mit den jeweiligen sich verbreiternden segmentartigen Endabschnitten 47, 49 vergleichsweise einfach ausgeführt sind. Eine Gemeinsamkeit mit den zuvor beschriebenen Ausführungsbeispielen besteht darin, dass die Führungskulisse 32 bzw. die Innenkulisse 34 jeweils wieder über einen Förderbahnausgang 28 bzw. einen Innenförderbahnausgang 30 an die Förderbahn 12 bzw. die Innenförderbahn 14 des Schwingfördertopfes 2 bzw. des Innentopfes 4 angebunden sind, wobei die Führungskulisse 32 und die Innenkulisse 34 dann etwa in Tangentialrichtung jeweils in einen Ausrichtschlitz 38 bzw. einen Innenausrichtschlitz 40 enden. Diese münden beim dargestellten Ausführungsbeispiel jeweils in einer Erweiterung 66 bzw. Innenerweiterung 68, deren lichte Weite in etwa dem Durchmesser des Kunststoffkragens 36, 36' der Aderendhülsen 10, 10' entspricht. Im Bereich der Schlitze 38, 40 werden auch bei diesem Ausführungsbeispiel die Aderendhülsen 10, 10' in Vertikalrichtung ausgerichtet, wobei jeweils die Hülsen 42, 42' aufgrund der Schwerkraft durch den jeweiligen Schlitzbereich 38, 40 hindurch nach unten (Ansicht nach Figur 10) ausschwenken. Über die jeweilige Erweiterung 66, Innenerweiterung 68 wird dann die Aderendhülse 10, 10' zur Schnittstelle des Crimpautomaten oder der sonstigen Verarbeitungseinheit geführt. Dies kann wiederum über ein Führungsrohr, einen Schieber, eine sonstige Förderbahn oder dergleichen erfolgen.

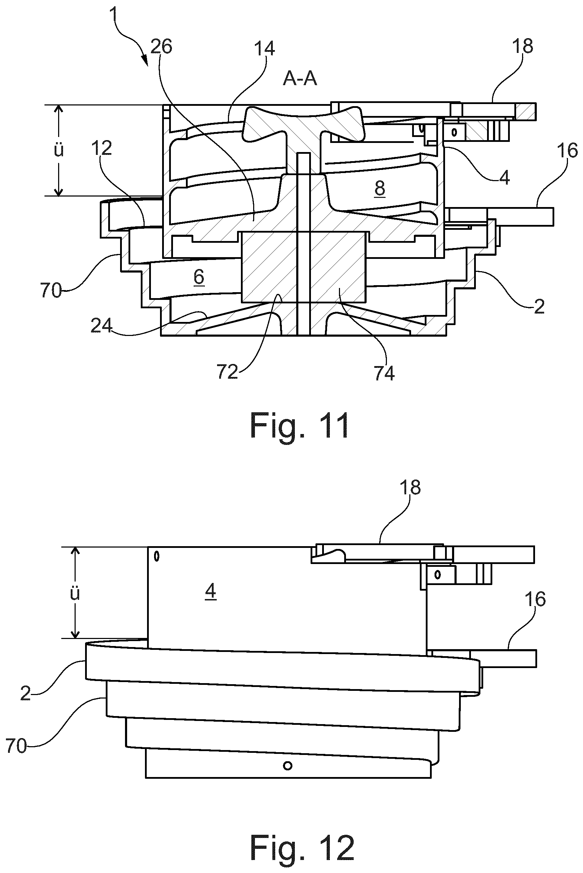

Wie insbesondere aus den Figuren 11 und 12 hervorgeht, besteht ein weiterer Unterschied zu den vorbeschriebenen Ausführungsbeispielen darin, dass der außen liegende Schwingfördertopf 2 nicht mit einer etwa zylinderförmigen Umfangswandung sondern mit einer spiralförmig abgestuften Umfangswandung 70 ausgeführt ist, deren Geometrie so ausgelegt ist, dass im Bereich der Innenumfangswandung die Förderbahn 12 ausgebildet wird, entlang der die Aderendhülsen 10 vom Boden 24 in Richtung zum Förderbahnausgang 28 (siehe Figur 10) gefördert werden. Bei diesem Ausführungsbeispiel ist der axiale Überstand Ü des Innentopfes 4 mit Bezug zum Schwingfördertopf 2 etwas größer als bei den zuvor beschriebenen Ausführungsbeispielen ausgebildet, so dass entsprechend auch der Axialversatz der Ausrichtungseinheit 16 mit Bezug zur Innenausrichtungseinheit 18 größer ist. Auch bei dieser Variante sind diese Komponenten in Umfangsrichtung leicht versetzt zueinander angeordnet, so dass die Zuführung bzw. Verbindung zur Schnittstelle des Crimpautomaten erleichtert ist.

Bei diesem Ausführungsbeispiel ist im Bereich des segmentartigen Endabschnitts 47, 49 eine den Ausrichtschlitz 38 bzw. den Innenausrichtschlitz 40 seitlich umgreifende Führungswandung 78 bzw. 80 vorgesehen, die die in diesem Bereich hineinragenden Kunststoffkragen 36, 36' der Aderendhülsen 10, 10' nach außen hin überdeckt.

Bei dem dargestellten Ausführungsbeispiel ist wiederum der Boden 24 des Schwingfördertopfes 2 zur Förderbahn 12 abfallend geneigt ausgebildet, wobei auf einer Stützfläche 72 des Bodens 24 ein Adapterring 74 aufliegt, auf dem der Innentopf 4 abgestützt ist. Dabei kann beispielsweise am Innenboden 26 eine Aufnahme 76 vorgesehen sein, in die der Endabschnitt des Adapterrings 74 eingreift, so dass der Innentopf 4 mit Bezug zum Schwingfördertopf 2 zentriert ist. Die Lagefixierung erfolgt wiederum über eine Fixierschraubanordnung 45.

Im Übrigen entspricht das Ausführungsbeispiel gemäß den Figuren 9 bis 12 denjenigen gemäß den Figuren 1 bis 8.

Offenbart ist eine Zuführeinrichtung zur lagedefinierten Zuführung von Kontaktelementen zu einer Verarbeitungseinheit, wobei die Zuführeinrichtung einen Schwingfördertopf und einen von diesem umgriffenen Innentopf zur Aufnahme unterschiedlicher Kontaktelemente aufweist.

### Bezugszeichenliste:

- 1: Zuführeinrichtung
- 2: Schwingfördertopf
- 4: Innentopf
- 6: Aufnahmeraum
- 8: Innenaufnahmeraum
- 10: Aderendhülse
- 11: Vibrationsantrieb
- 12: Förderbahn
- 14: Innenförderbahn
- 16: Ausrichtungseinheit
- 18: Innenausrichtungseinheit
- 20: Führungsrohr
- 22: Innenführungsrohr
- 24: Boden
- 26: Innenboden
- 28: Förderbahnausgang
- 30: Innenförderbahnausgang
- 32: Führungskulisse
- 34: Innenkulisse
- 36: Kunststoffkragen
- 38: Ausrichtschlitz
- 40: Innenausrichtschlitz
- 42: Hülse
- 44: Stützbuchse
- 45: Fixierschraubanordnung
- 46: Vereinzelungseinrichtung
- 47: segmentartiger Endabschnitt
- 48: Vereinzelungseinrichtung
- 49: segmentartiger Endabschnitt
- 50: Schieber
- 52: Innenschieber
- 54: Ausnehmung
- 56: Ausnehmung
- 62: Abweiser
- 64: Innenabweiser
- 66: Erweiterung
- 68: Innenerweiterung
- 70: Umfangswandung
- 72: Stützfläche
- 74: Adapterring
- 76: Aufnahme
- 78: Führungswandung
- 80: Führungswandung

## Patentansprüche

1. Zuführeinrichtung zur lagedefinierten Zuführung von Kontaktelementen oder dergleichen zu einer Verarbeitungseinheit, vorzugsweise einem Crimpautomaten, mit einem Schwingfördertopf (2), über den Kontaktelemente von einem Aufnahmeraum (6) entlang einer etwa spiralförmig, an einer Innenumfangswandung des Schwingfördertopfes (2) ausgebildeten Förderbahn (12) in Richtung zu einer den Schwingfördertopf (2) zugeordneten Ausrichtungseinheit (16) förderbar sind, der eine Führungskulisse (32) zugeordnet ist, entlang der die Kontaktelemente lageorientiert in Richtung einer Schnittstelle zur Verarbeitungseinheit transportierbar sind, **gekennzeichnet durch** einen Schwingförder-Innentopf (4), der, vorzugsweise koaxial, zumindest abschnittsweise vom Schwingfördertopf (2) umgriffen ist und der mit einer etwa spiralförmigen Innenförderbahn (14), einer Innenkulisse (34) einer Innenausrichtungseinheit (18) sowie einer Innenschnittstelle ausgeführt ist, die in einem Abstand, abschnittsweise in einem Radial oder Umfangsabstand zu den entsprechenden Komponenten des Schwingfördertopfes (2) verlaufen bzw. positioniert sind.

2. Zuführeinrichtung nach Patentanspruch 1, wobei der Innentopf (4) mit der Innenausrichtungseinheit (18) und der Innenkulisse (34) mit Bezug zur Förderbahn (12) in Axialrichtung aus dem Schwingfördertopf (2) auskragt, wobei an diesem auskragenden Bereich des Innentopfes (4) die Innenausrichtungseinheit (18) und die Innenschnittstelle ausgebildet sind.

3. Zuführeinrichtung nach Patentanspruch 1 oder 2, wobei die Schnittstelle und die Innenschnittstelle in Radialrichtung gegenüber dem jeweiligen Topfumfang, insbesondere dem Umfang des Schwingfördertopfs (2) nach außen versetzt sind und/oder die Schnittstelle und die Innenschnittstelle etwa in Umfangsrichtung und in Axialrichtung des Schwingfördertopfs (2) und/oder des Innentopfs (4) relativ zueinander versetzt sind.

4. Zuführeinrichtung nach einem der vorhergehenden Patentansprüche, wobei am Boden (24) des Schwingfördertopfes (2) etwa mittig eine Stützbuchse (44) angeordnet ist, auf der der Innentopf (4) abgestützt ist.

5. Zuführeinrichtung nach Patentanspruch 4, wobei die Stützbuchse (44) als Adapterring (74) ausgebildet ist, der einerseits auf dem Boden (24) des Schwingfördertopfes (2) abgestützt ist und andererseits den Innentopf (4) trägt.

6. Zuführeinrichtung nach einem der vorhergehenden Patentansprüche, mit einer zentralen Fixierschraubanordnung (45), über die der Schwingfördertopf (2) und der Innentopf (4) miteinander und/oder mit einem Vibrationsantrieb (11) verbunden sind.

7. Zuführeinrichtung nach einem der vorhergehenden Patentansprüche, wobei der Ausrichtungseinheit (16) bzw. der Innenausrichtungseinheit (18) eine Vereinzelungseinrichtung (46, 48) zugeordnet ist, über die das Kontaktelement vereinzelt der Schnittstelle bzw. der Innenschnittstelle zuführbar ist.

8. Zuführeinrichtung nach Patentanspruch 7, wobei die Vereinzelungseinrichtung (46, 48) einen Schieber (50) bzw. einen Innenschieber (52) hat, der vorzugsweise mit einer Ausnehmung (54, 56) für ein Kontaktelement ausgeführt ist und der zur Übergabe des Kontaktelementes in Richtung der Schnittstelle/Innenschnittstelle verschiebbar ist.

9. Zuführeinrichtung nach einem der vorhergehenden Patentansprüche, wobei die Innenschnittstelle und die Schnittstelle jeweils mit einem Innenführungsrohr (22) bzw. einem Führungsrohr (20) ausgeführt sind, die im Parallelabstand zueinander angeordnet sind.

10. Zuführeinrichtung nach einem der vorhergehenden Patentansprüche, wobei Endabschnitte der Führungskulisse (32) und der Innenkulisse (34) etwa tangential zum Schwingfördertopf (2) bzw. zum Innentopf (4) verlaufen und in einem spitzen Winkel relativ zueinander angestellt sind.

11. Zuführeinrichtung nach einem der vorhergehenden Patentansprüche, wobei der Schwingfördertopf (2) eine entsprechend der Förderbahn (12) spiralförmig abgestufte Umfangswandung (70) hat.
